# EUROPEAN PATENT SPECIFICATION

(11) **EP 3 994 221 B1**
(45) Date of publication and mention of the grant of the patent: **30.08.2023**
(21) Application number: 20734578.6
(22) Date of filing: 01.07.2020
(51) Int. Cl.: C09D 167/08, C09F 9/00, C08K 5/00, C09D 7/63

(54) **COATING COMPOSITION COMPRISING AN AUTOXIDIZABLE RESIN AND AN IRON-LIGAND COMPLEX, SUBSTRATE COATED WITH SUCH COATING COMPOSITION, AND USE OF SUCH IRON-LIGAND COMPLEX**
BESCHICHTUNGSZUSAMMENSETZUNG MIT EINEM AUTOXIDIERBAREN HARZ UND EINEM EISENLIGANDENKOMPLEX, MIT DIESER BESCHICHTUNGSZUSAMMENSETZUNG BESCHICHTETES SUBSTRAT UND VERWENDUNG SOLCH EINES EISENLIGANDENKOMPLEXES
COMPOSITION DE REVÊTEMENT COMPRENANT UNE RÉSINE AUTO-OXYDABLE ET UN COMPLEXE FER-LIGAND, SUBSTRAT REVÊTU D'UNE TELLE COMPOSITION DE REVÊTEMENT, ET UTILISATION D'UN TEL COMPLEXE FER-LIGAND

(30) Priority: 04.07.2019 EP 19184519
(43) Date of publication of application: 11.05.2022
(73) Proprietor: Akzo Nobel Coatings International B.V., 1077 WW Amsterdam (NL)
(72) Inventor: BOOTSMA, Johan, 1098 XH Amsterdam (NL); DE BRUIN, Bas, 1098 XH Amsterdam (NL); FLAPPER, Jitte, 6824 BM Arnhem (NL)
(74) Representative: Akzo Nobel IP Department
(86) International application number: PCT/EP2020/068481
(87) International publication number: WO 2021/001410

(56) References cited:
- WO-A1-2008/003652
- WO-A1-2015/082553
- WO-A1-2017/085154
- MILAN ERBEN ET AL: "Acyl-substituted ferrocenes as driers for solvent-borne alkyd paints", JOURNAL OF MOLECULAR CATALYSIS A: CHEMICAL, ELSEVIER, AMSTERDAM, NL, vol. 353, 29 October 2011 (2011-10-29), pages 13-21, XP028357192, ISSN: 1381-1169, DOI: 10.1016/J.MOLCATA.2011.10.024 [retrieved on 2011-11-20] cited in the application
- ERBEN M ET AL: "Synthesis and characterization of transition metal complexes bearing tetrafluoro-4-pyridyl substituent on the cyclopentadienyl ring", INORGANICA CHIMICA ACTA, ELSEVIER BV, NL, vol. 363, no. 13, 25 October 2010 (2010-10-25), pages 3365-3375, XP027395019, ISSN: 0020-1693 [retrieved on 2010-06-22]
- MOHAMAD-ALI TEHFE ET AL: "Combination of transition metal carbonyls and silanes: New photoinitiating systems : Transition Metal Carbonyls and Silanes", JOURNAL OF POLYMER SCIENCE PART A: POLYMER CHEMISTRY, vol. 48, no. 8, 15 April 2010 (2010-04-15) , pages 1830-1837, XP055725112, US ISSN: 0887-624X, DOI: 10.1002/pola.23956
- KALENDA P ET AL: "Influence of methyl groups on ferrocene on rate of drying of oxidizable paints by using model compounds", PROCESS IN ORGANIC COATINGS, ELSEVIER BV, NL, vol. 56, no. 2-3, 1 July 2006 (2006-07-01) , pages 111-113, XP027906385, ISSN: 0300-9440 [retrieved on 2006-07-01]
- Ronald Hage ET AL: "Manganese and Iron Catalysts in Alkyd Paints and Coatings", Inorganics, vol. 4, no. 2, 29 April 2016 (2016-04-29), page 11, XP055337488, ISSN: 2304-6740, DOI: 10.3390/inorganics4020011

## Description

### Field of the Invention

The present invention relates to a coating composition comprising an autoxidizable resin and an iron-ligand complex as drier, a substrate coated with a coating deposited from such coating composition, and to use of such iron-ligand complex in a coating composition comprising an autoxidizable resin.

### Background of the Invention

Autoxidizable resins are well-known in the coatings industry. Alkyd resins are an example of autoxidizable resins. Other examples of autoxidizable resins are resins comprising unsaturated ether groups such as found in e.g. allyl ethers, cyclopentenylethers and vinyl dioxolanes, and polymers or copolymers of butadiene.

Alkyds are widely used in coating compositions such as paint. An alkyd is a fatty acid functionalized polyester resin that comprises unsaturated fatty acids, such as for example oleic acid, linoleic acid, or linolenic acid. Drying of paints comprising autoxidizable resins, comprises evaporation of the liquid carrier (organic solvent and/or water) and, subsequently, hardening of the resin via radical autoxidation reactions. The latter is known as chemical or oxidative drying. The fatty acid moieties of the alkyd resin react with oxygen from the atmosphere to form hydroperoxides which subsequently decompose to form free radicals. Recombination of these free radicals causes covalent bonds to be formed between the alkyd polymer chains, thus forming cross-links between polymer chains. In this way, a liquid coating composition that comprises alkyd resin hardens to form a solid cured coating. This process is also referred to as autoxidation or oxidative drying.

Alkyd paints typically form a hard, glossy surface that is easy to clean and resists scratching, water, and chemicals. They are primarily used for trim, doors, cabinets, furniture, floors, and other high-use areas, and popular with professional painters because they adhere well to most surfaces and "level out" to hide brush marks and small surface irregularities, and cure to a smooth surface that latex paints cannot match.

The time for alkyd paints to dry depends on the concentration and type of unsaturated oil or fatty acids used to prepare the resin. Autoxidation and crosslinking of the unsaturated fatty acid component can proceed unaided, but the time for drying is generally found to be unacceptably long for many practical purposes. The reactions are significantly accelerated by the presence of a metalbased drying catalyst, commonly referred to as a "drier" or "siccative". Whereas an alkyd coating may take months to dry in the absence of a drying catalyst, in the presence of such catalyst, drying can be accomplished within a much shorter time.

Well-known driers include salts containing cobalt (Co), cerium (Ce), iron (Fe), manganese (Mn) and vanadium (V) as the cation; and halides, nitrates, sulphates, and carboxylates such as acetates, ethylhexanoates, octanoates, neodecanoates, and naphthenates, or acetoacetonates, as the anion. The catalytic activity of the polyvalent metal during decomposition of the (hydro)peroxide relies on the repeated transition of the metal ion from the lower to the higher oxidation state and back again, leading to reduction and oxidation of the hydroperoxides to catalyze and accelerate oxidation of the unsaturated oil component of the composition. For this reason, transition metals are commonly employed in such driers, since transition metals are capable of switching from a lower valence state to a higher valence state in a redox reaction with fatty acid peroxides present in the alkyd.

Three different types of driers have been identified (WO2012079624; Soucek et al Prog. Org Chem. 73, (2012) pp 435-454). Primary driers, also referred to as top driers, surface driers or oxidation driers, promote the top-down hardening of a liquid alkyd resin. The mode of action of primary driers in the autoxidative curing process is deactivation of natural occurring anti-oxidants, oxygen uptake, peroxide formation and peroxide decomposition. Primary driers are characterized by having at least two accessible valence states which allows catalytic hydroperoxide decomposition and regeneration of the active species. Examples of primary driers are cobalt (Co), cerium (Ce), iron (Fe), manganese (Mn) and vanadium (V) salts. To enhance homogeneous through drying of a coating film, primary driers are frequently used in combination with secondary and coordination driers.

Coordination driers, also referred to as through driers, promote the filmforming process by interaction with the carboxyl and hydroxyl groups in the polymeric binder. Thus, coordination driers can bridge two or more polymer chains. These carboxyl and hydroxyl groups may be initially present in the binder molecule or formed during the autoxidation process. This group comprises the metal driers based on zirconium (Zr), strontium (Sr), aluminum (Al), bismuth (Bi), lanthanum (La), neodymium (Nd), lead (Pb), and barium (Ba).

Secondary driers, also referred to as auxiliary driers, are metal driers that exist in a single oxidation state and are not catalytically active by themselves. Secondary driers affect the drying rate by interacting with the primary driers. Secondary driers include calcium (Ca), zinc (Zn), potassium (K) and lithium (Li) metal soaps.

To improve appearance and quality of the resulting coating film and to accelerate the drying time, primary driers may be combined with coordination driers and/or secondary driers.

The most widely used primary driers are cobalt carboxylates because of their good drying performance at ambient temperature and coloristic properties. However, their applicability might be restricted in the near future because of regulation issues.

Primary driers based on non-cobalt metals, in particular primary driers comprising complexes of iron or manganese and nitrogen donor ligands are known. In J.W de Boer et al., The quest for Cobalt-Free Alkyd Paint Driers, Eur. J. Inorg. Chem, 2013, 3581-3591, an overview of such driers is given.

Honziček *et al.* have described the catalytic properties of benzoylferrocene, as a representative of cobalt-free drier, with soybean oil (Honziček *et al J.* Applied Polymer Science, 2018, Volume135, Issue16, 46184 https://doi.org/10.1002/app.46184).

Erben *et al.* discuss several acylsubstituted ferrocenes as driers for solvent-borne alkyd paints. They describe the drying behavior of acyl-substituted ferrocenes [Fe(Cp)(η⁵-C₅H₄COCH₃)], [Fe(Cp)(η⁵-C₅H₄COCF₃)], [Fe(Cp)(η⁵-C₅H₄COPh)], [Fe(η⁵-C₅H₄COCH₃)₂], [Fe(η⁵-C₅H₄COCF₃)₂], and [Fe(η⁵-C₅H₄COPh)₂] and compare these with a commercial cobalt(II) paint drier (Co Nuodex) and unsubstituted ferrocene in a solvent-borne phthalic type alkyd resin modified with tall oil. Final relative hardness and drying time were recorded for each system. Substituted ferrocenes were more effective than the commercial cobalt Nuodex drier. Unsubstituted ferrocene showed a negligible activity toward alkyd resin autoxidation (M. Erben et al. Journal of Molecular Catalysis A: Chemical 353- 354 (2012) 13- 21).

Coating compositions comprising an autoxidizable resin and a drier are typically prone to skinning, i.e. formation of a tough rubber-like skin on the surface of the liquid paint, even in a closed can. In order to prevent such skinning, so-called anti-skinning agents are often added to coating compositions with autoxidizable resins. Anti-skinning agents are well-known in the art and include for example phenols, hydroquinones, aliphatic and aromatic amines, azones, α-hydroxyketones, hydroxylamines, β-dicarbonyl compounds, natural anti-oxidants such as tocopherol and isoascorbates, and oximes.

The issues with respect to drying of alkyd-based paints, as described above, equally apply to other autoxidizable coatings.

There is a need for autoxidizable coating compositions with a cobalt-free drier that result in a cured coating with characteristics at least comparable to those with cobalt-based driers, in particular with regard to hardness and skinning behavior.

### Summary of the Invention

It has now been found that if an iron-ligand complex comprising an iron cation, a cyclopentadienyl group as ligand, and at least one further ligand, wherein the molar ratio of iron cation to cyclopentadienyl group is 1:1, is used as drier in a coating composition comprising an autoxidizable resin, the hardness of the resulting coating film is comparable to the hardness of a coating composition comprising an autoxidizable resin and a cobalt-based drier.

Accordingly, the invention provides in a first aspect a coating composition comprising an autoxidizable binder and an iron-ligand complex as drier, wherein the iron-ligand complex comprises an iron cation, an optionally substituted cyclopentadienyl group as ligand, and a further ligand other than a cyclopentadienyl group, wherein the molar ratio of iron cation to cyclopentadienyl group is 1:1.

An advantage of the coating composition according to the invention is that it can be formulated without anti-skinning agents.

In a second aspect, the invention provides a substrate coated with a coating deposited from a coating composition according to the first aspect of the invention.

In a third aspect the invention provides use of an iron-ligand complex as hereinabove defined in a coating composition comprising an autoxidizable resin to enhance drying of the coating composition.

### Detailed Description of the Invention

The coating composition according to the invention comprises an autoxidizable binder and a drier. The drier comprises an iron-ligand complex comprising an iron cation and an optionally substituted cyclopentadienyl group as ligand, and at least one further ligand other than a cyclopentadienyl group. The molar ratio of iron cation to cyclopentadienyl group is 1:1.

A ligand is an ion or molecule that binds to a central metal ion to form a coordination complex. The bonding with the metal ion generally involves formal donation of one or more of the ligand's electron pairs.

The cyclopentadienyl group may be substituted by one or more alkyl or aryl radicals. If the cyclopentadienyl group is substituted, the one or more radicals substituting the cyclopentadienyl group are preferably selected from the group consisting of straight or branched alkyl radicals having 1 to 40 carbon atoms and aryl radicals having 6 to 20 carbon atoms. The aryl radical may by a polycyclic radical, such as an indenyl radical. The radicals may comprise a heteroatom, such as an oxygen atom. Preferably, the substituent radicals are free of hereoatoms and only comprise carbon and hydrogen atoms. More preferably, the cyclopentadienyl group is unsubstituted cyclopentadienyl.

The iron cation in the iron-ligand complex may be iron(I), iron(II) or iron(III), preferably the iron cation is iron(II) or iron(III), more preferably iron(II).

The iron-ligand complex comprises a further ligand other than a cyclopentadienyl group. The iron-ligand complex may comprise more than one further ligand, which further ligands may or may not be the same.

The further ligand may be any suitable ligand. Preferably, the further ligand is, independently, selected from the group consisting of carbon monoxide (CO), a halide ion, a straight or branched hydrocarbon containing 1 to 40 carbon atoms, a straight or branched alkene containing 1 to 40 carbon atoms comprising one or more unsaturations, an aromatic hydrocarbon having 6 to 20 carbon atoms, sulfide, thiocyanate, nitrate, azide, hydroxide, oxalate, water, nitrite, isothiocyanate, acetonitrile, pyridine, alkyl-substituted pyridines, ammonia, ethylenediamine, 2,2'-bipyridine, 1,10-phenanthroline, a phosphine (e.g. triphenylphosphine, trimethylphosphine, triethylphosphine benzene, 1,2-Bis(diphenylphosphino)ethane (dppe), 1,1-bis(diphenylphosphino)methane (dppm)), cyanide, isocyanide, persistent carbene, N-heterocyclic carbene, acetylacetonate, and hydride. More preferably, the further ligand is, independently, selected from the group consisting of carbon monoxide (CO), halides, aliphatic hydrocarbon radicals with 1 to 40 carbon atoms, aromatic hydrocarbon radicals with 6 to 40 carbon atoms, alkenes with 2 to 20 carbon atoms, aromatic hydrocarbons with 6 to 14 carbon atoms, sulfides, thiocyanate, nitrate, azide, hydroxide, oxalate, water, nitrite, isothiocyanate, acetonitrile, pyridine, ammonia, ethylenediamine, 2,2'-bipyridine, 1,10-phenanthroline, triphenylphosphine, trimethylphosphine, triethylphosphine, cyanide, and hydride.

In the coating composition, the amount of iron cation comprised in the iron-ligand complex is preferably in the range of from 1·10⁻⁴ wt% to 1.0 wt, based on the weight of autoxidizable binder. More preferably the amount of iron cation comprised in the iron-ligand complex is in the range of from 1·10⁻³ wt% to 0.1 wt%, even more preferably of from 0.005 wt% to 0.05 wt%. Reference herein to the weight of autoxidizable binder is to the non-volatile weight (often referred to as solid weight) of the autoxidizable binder. Solid weight of autoxidizable binders can suitably be determined according to ISO 3251:2008 wherein a sample is dried at 105 °C for 60 minutes.

The iron-ligand complex may be a double sandwich structure such as a π-arene bis((π-cyclopentadienyl)iron) ion such as described in structures I - XV by Morrison *et al* (Morrison et al, 1974, Journal of the American Chemical Society 96:11 pp 3603- 3608).

Combinations of different iron-ligand complexes may be used.

Preferably, the iron-ligand complex in the coating composition of the invention is a complex of Formula (I) or of Formula (II) given below.

In a one embodiment, the iron-ligand complex is of Formula (I): 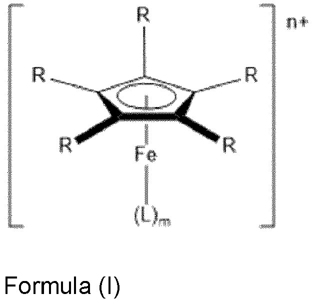 wherein R is, independently, an H atom, a straight or branched alkyl radical having 1 to 40 carbon atoms, or an aryl radical having 6 to 20 carbon atoms; L is, independently, a further ligand other than a cyclopentadienyl group; m is an integer with a value of 1, 2 or 3; and n is an integer with a value of 0, 1, or 2, preferably 0 or 1.

The iron-ligand complex of Formula (I) has one, two or three further ligands which may be the same or different. Further ligand L may be any suitable further ligand, such as the ligands described hereinabove. Preferably, the further ligands in Formula (I) are, independently, carbon monoxide or a halide ion.

R is preferably, independently, selected from the group consisting of an H atom, a straight or branched alkyl radical having 1 to 20 carbon atoms, and an aryl radical having 6 to 16 carbon atoms. More preferably R is, independently, selected from the group consisting of an H atom and a straight or branched alkyl radical having 1 to 6 carbon atoms. Most preferably, the cyclopentadienyl group is unsubstituted, and all R's are an H atom.

In case the iron-ligand complex is positively charged, i.e. n is 1 or 2 in Formula (I), a counter ion is present. The counter ion is in principle not critical. It may be a mono-anion or a di-anion. The type of counter ion may be used to tune the solubility of the iron ligand complex in different solvents. Preferably, the counter ion is a mono-anion selected from the group consisting of PF₆⁻, SbF₆⁻, BF₄⁻, B(C₆,F₅)⁻, Cl⁻, B⁻, I⁻, NO₃⁻, and carboxylates R'COO⁻ wherein R' is a C1-C20 alkyl optionally substituted with heteroatoms; or SO₄²⁻. Preferably the anion is a carboxylate selected from the group consisting of acetate, ethylhexanoate, octanoate, neodecanoate, naphthenate, and acetoacetonate.

A particularly suitable iron-ligand complex according to general Formula (I) is cyclopentadienyliron dicarbonyl halide, i.e. a complex of Formula (I) wherein the cyclopentadienyl group is unsubstituted (all R groups are an H atom) with three further ligands L (m is 3) of which two CO ligands and one halide ligand selected from chloride, bromide and iodide. In this complex n is 0. Dicarbonyl cyclopentadienyliron dicarbonyl iodide is especially preferred.

The iron-ligand complex according to general Formula (I) may be of the following Formula (Ia): 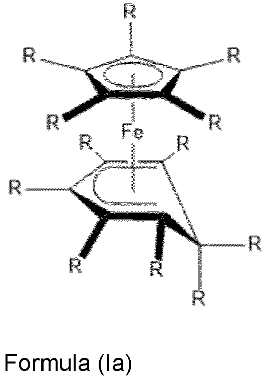 wherein R is, independently, as described above.

A particularly suitable iron-ligand complex according to general Formula (la) is η⁵-C₅H₅ Fe(II) η⁵-C₆H₇, i.e. all R groups are an H atom.

In another embodiment, the iron-ligand complex is of general Formula (II): 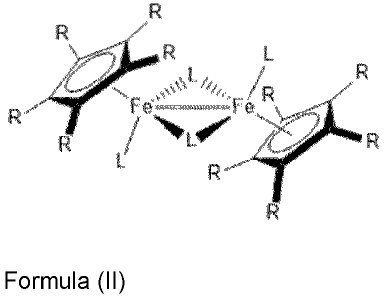 wherein R is as specified above for general Formula (I) and L is, independently, a further ligand other than a cyclopentadienyl group. Further ligand L may be any suitable further ligand, such as the ligands described hereinabove.

A particularly suitable iron ligand complex of general Formula (II) is cyclopentadienyliron dicarbonyl dimer, i.e. a complex of Formula (II) wherein the cyclopentadienyl group is unsubstituted (all R groups are an H atom) and all four further ligands L are CO ligands.

The coating composition may comprise a further primary drier comprising a metal selected from the group consisting of cobalt, vanadium, manganese, iron, and cerium. Preferably, the coating composition does not comprise cobalt and is thus free of a drier comprising cobalt. The coating composition may further comprise coordination driers and/or secondary driers.

The autoxidizable binder preferably is an alkyd resin. Any autoxidizable alkyd resin may be used. Such alkyd resins are known in the art. The alkyd resin may have any suitable molecular weight, oil length, or unsaturation of its fatty acid chains.

The alkyd resin may be present in any suitable amount, depending on the intended use of the coating composition. Typically, the amount of alkyd resin in the coating composition is in the range of from 20 wt% to 95 wt% based on the total weight of the composition, preferably of from 30 to 90 wt%, more preferably of from 35 to 70 wt%.

The coating composition of the invention may be a solvent-based composition wherein the autoxidizable binder is dissolved in a suitable organic solvent, or an aqueous coating composition wherein the autoxidizable binder is emulsified or dispersed in an aqueous phase. In case the autoxidizable binder is sufficiently liquid at ambient temperature, the coating composition may be a nonaqueous solvent-free coating composition. Preferably, the coating composition is a solvent-based composition comprising an autoxidizable resin, preferably an alkyd, dissolved in an organic solvent.

The iron-ligand complex may be added to the coating composition in any suitable form, for example dissolved in an organic solvent, in solid form, or dispersed in water.

The coating composition may comprise one or more additives. Any additives known to be suitable for coating compositions with autoxidizable binders, may be used. Examples of suitable additives include UV stabilizers, dispersants, surfactants, anti-static agents, flame-retardant agents, lubricants, anti-foaming agents, anti-oxidants, plasticizers, anti-freezing agents, waxes, and thickeners. The amounts additives will usually be less than 5 wt%, based on the total weight of the coating composition, preferably less than 3 wt%.

Preferably, the coating composition comprises a hindered amine light stabilizer (HALS). A hindered amine light stabilizer is a derivate of 2,2,6,6-tetramethylpiperidine.

Examples of such hindered amine light stabilizers include bis(2,2,6,6-tetramethyl-4-piperidyl) sebacate, bis(2,2,6,6-tetramethyl-4-piperidyl) succinate, bis(1,2,2,6,6-pentamethyl-4-piperidyl) sebacate, bis(1-octyloxy-2,2,6,6-tetramethyl-4-piperidyl) sebacate, methyl 1,2,2,6,6-pentamethyl-4-piperidyl sebacate, (2,2,6,6-tetramethylpiperidin-1-yl)oxyl, bis(1,2,2,6,6-pentamethyl-4-piperidyl) n-butyl-3,5-di-tert-butyl-4-hydroxybenzylmalonate, the condensate of 1-(2-hydroxyethyl)-2,2,6,6-tetramethyl-4-hydroxypiperidine and succinic acid, linear or cyclic condensates of N,N'-bis(2,2,6,6-tetramethyl-4-piperidyl) hexamethylenediamine and 4-tert-octylamino-2,6-dichloro-1,3,5-triazine, tris(2,2,6,6-tetramethyl-4-piperidyl)nitrilotriacetate, tetrakis(2,2,6,6-tetramethyl-4-piperidyl)-1,2,3,4-butane tetracarboxylate, 1,1'-(1,2-ethanediyl)-bis(3,3,5,5-tetramethylpiperazinone), 4-benzoyl-2,2,6,6-tetramethylpiperidine, 4-stearyloxy-2,2,6,6-tetramethylpiperidine, bis(1,2,2,6,6-pentamethylpiperidyl)-2-n-butyl-2-(2-hydroxy-3,5-di-tert-butylbenzyl)malonate, 3-n-octyl-7,7,9,9-tetramethyl-1,3,8-triazaspiro[4.5]decane-2,4-dione, bis(1-octyloxy-2,2,6,6-tetramethylpiperidyl) sebacate, bis(1-octyloxy-2,2,6,6-tetramethylpiperidyl) succinate, linear or cyclic condensates of N,N'-bis(2,2,6,6-tetramethyl-4-piperidyl)hexamethylenediamine and 4-morpholino-2,6-dichloro-1 ,3,5-triazine, the condensate of 2-chloro-4,6-bis(4-n-butylamino-2,2,6,6-tetramethylpiperidyl)-1,3,5-triazine and 1,2-bis(3-aminopropylamino)ethane, the condensate of 2-chloro-4,6-di-(4-n-butylamino-1,2,2,6,6-pentamethylpiperidyl)-1,3,5-triazine and 1,2-bis(3-aminopropyl amino)ethane, 8-acetyl-3-dodecyl-7,7,9,9-tetramethyl-1,3,8-triazaspiro[4.5] decane-2,4-dione, 3-dodecyl-1-(2,2,6,6-tetramethyl-4-piperidyl) pyrrolidine-2,5-dione, 3-dodecyl-1-(1,2,2,6,6-pentamethyl-4-piperidyl)pyrrolidine-2,5-dione, a mixture of 4-hexadecyloxy- and 4-stearyloxy-2,2,6,6-tetramethylpiperidine, a condensate of N,N'-bis(2,2,6,6-tetramethyl-4-piperidyl)hexamethylenediamine and 4-cyclohexylamino-2,6-dichloro-1,3,5-triazine, a condensate of 1,2-bis(3-aminopropylamino)ethane and 2,4,6-trichloro-1,3,5-triazine as well as 4-butylamino-2,2,6,6-tetramethylpiperidine (CAS Reg. No. 136504-96-6); a condensate of 1,6-hexanediamine and 2,4,6-trichloro-1,3,5-triazine as well as N,N-dibutylamine and 4-butylamino-2,2,6,6-tetramethylpiperidine (CAS Reg. No. 192268-64-7); N-(2,2,6,6-tetramethyl-4-piperidyl)-n-dodecylsuccinimide, N-(1,2,2,6,6-pentamethyl-4-piperidyl)-n-dodecylsuccinimide, 2-undecyl-7,7,9,9-tetramethyl-1-oxa-3,8-diaza-4-oxo-spiro[4,5]decane, a reaction product of 7,7,9,9-tetramethyl-2-cycloundecyl-1-oxa-3,8-diaza-4-oxospiro-[4,5]decane and epichloro hydrin, 1,1-bis(1,2,2,6,6-pentamethyl-4-piperidyloxycarbonyl)-2-(4-methoxy phenyl)ethene, N,N'-bis-formyl-N,N'-bis(2,2,6,6-tetramethyl-4-piperidyl) hexamethylenediamine, a diester of 4-methoxymethylenemalonic acid with 1,2,2,6,6-pentamethyl-4-hydroxypiperidine, poly[methylpropyl-3-oxy-4-(2,2,6,6-tetramethyl-4-piperidyl)]siloxane, a reaction product of maleic acid anhydride-α-olefin copolymer with 2,2,6,6-tetramethyl-4-aminopiperidine or 1,2,2,6,6-pentamethyl-4-aminopiperidine, 2,4-bis[N-(1-cyclohexyloxy-2,2,6,6-tetramethyl piperidine-4-yl)-N-butylamino]-6-(2-hydroxy ethyl)amino-1,3,5-triazine, 1-(2-hydro-oxy-2-methylpropoxy)-4-octadecanoyloxy-2,2,6,6-tetramethylpiperidine, 5-(2-ethylhexanoyl)-oxymethyl-3,3,5-trimethyl-2-morpholinone, Sanduvor (Clariant; CAS Reg. No. 106917-31-1], 5-(2-ethylhexanoyl)oxymethyl-3,3,5-trimethyl-2-morpholinone, the reaction product of 2,4-bis-[(1-cyclohexyloxy-2,2,6,6-piperidine-4-yl)butylamino]-6-chloro-s-triazine with N,N'-bis(3-aminopropyl)ethylenediamine), 1,3,5-tris(N-cyclohexyl-N-(2,2,6,6-tetramethylpiperazine-3-one-4-yl)amino)-s-triazine, and 1,3,5-tris(N-cyclohexyl-N-(1,2,2,6,6-pentamethylpiperazine-3-one-4-yl)-amino)-s-triazine.

Particularly suitable hindered amine light stabilizers include bis(1,2,2,6,6-pentamethyl-4-pipridyl)sebacate, methyl 1,2,2,6,6-pentamethyl-4-piperidyl sebacate, and mixtures thereof, bis(1-octyloxy-2,2,6,6-tetramethyl-4-piperidyl)sebacate (commercially available as Tinuvin 5100, CAS Reg. No. 129757-67-1), and (2,2,6,6-tetramethylpiperidin-1-yl)oxyl.

It has been found that coating compositions according to the invention that comprise a hindered amine light stabilizer show less discoloration than such coating compositions without a hindered amine light stabilizer.

The coating composition may comprise the hindered amine light stabilizer in any amount suitable for light stabilizers in coating compositions, preferably in an amount in the range of from 0.05 to 3.0 wt%, more preferably of from 0.1 to 2.0 wt%, based on the weight of the coating composition.

The coating composition according to the invention may comprise an anti-skinning agent. Anti-skinning agents are known in the art and include phenols, hydroquinones, hydroxylamines, in particular N,N-dialkylhydroxylamines, and oximes. It is an advantage of the coating composition according to the invention that it shows no or little skin formation in the paint can and thus can be formulated with only a small amount or even without anti-skinning agent. The coating composition according to the invention preferably comprises less than 0.01 wt%, more preferably less than 0.001 wt% anti-skinning agent; even more preferably is free of an anti-skinning agent.

The coating composition according to the invention may for example be used as an adhesive, a primer, a topcoat, a high-gloss or a matt coating, a wood coating, a wall paint or a flooring paint. The coating composition may suitably be used to coat any suitable substrate, such as for example wood, wood-based substrates (e.g. fibreboard, chipboard), metal, mineral substrates (e.g. stone, plaster, concrete, masonry, cement, gypsum), plastic substrates, fibre-based substrates, ceramic substrates such as glass, asphalt, leather, paper.

The invention is further illustrated by the following non-limiting examples.

### Examples

### Base paints

Base paints A, B, C and D were prepared as follows.

Base paint A was prepared by adding to 39.5 weight parts of alkyd (Setal 270 SM-70; a commercially available air-drying long oil alkyd resin based on soya bean oil with 70 wt% alkyd solids; ex. Allnex): 1.4 weight parts of Nuodex Ca5 (a commercially available calcium drier (5 wt% metal); ex. Huntsman Pigments); 1.4 weight parts of Nuodex Zr18 (a commercially available zirconium drier (18 wt% metal); ex. Huntsman Pigments); and 0.25 weight parts of Exkin 2 (methyl ethyl ketoxime, Huntsman Pigments).

A white base paint B was prepared by adding to 45 weight parts of alkyd: 40 weight parts of a titanium paste prepared as described below; 2 weight parts of Nuodex Ca5; 2 weight parts of Nuodex Zr18; 0.5 weight parts of Exkin 2; and 10.5 weight parts of Exxsol D 40 (hydrotreated heavy Naphtha (petroleum)).

The titanium dioxide paste was prepared by dispersing 59.2 weight parts of Tioxide TR 92 (titanium dioxide, rutile, Huntsman Pigments) in 30.7 weight parts of alkyd Setal 270 SM-70 comprising 0.2 weight parts of Nuosperse 657 (a wetting and dispersing agent, Elementis Specialties), 0.4 weight parts of Bentone SD-1 (a Rheological Additive, Elementis Specialties), and 9.5 weight parts of Exxsol D 40.

A clear base paint C was prepared by adding to 79 weight parts of Setal 270 SM-70: 2.8 weight parts of Nuodex Ca5; 2.8 weight parts of Nuodex Zr18; 0.5 weight parts of Exkin 2; and 15 weight parts of Exxsol D 40.

A white base paint D was prepared by adding to 45 weight parts of Setal 270 SM-70: 40 weight parts of a titanium dioxide paste prepared as described above for base paint B; 2 weight parts of Nuodex Ca5; and 2 weight parts of Nuodex Zr18.

### EXAMPLE 1 - drying time and hardness

### Alkyd paints with different driers

Different paints were prepared by adding a primary drier to base paint A, B, or C. Table 1 lists the primary driers as used.

**Table 1 - Primary driers used**

| code | name | supplier | metal content (wt%) |
|---|---|---|---|
| Co | Durham Nuodex Cobalt 10 Neo^{a} | Venator | 10 |
| DC | DryCoat^{b} | Venator | 1 |
| BOC | Borchi OXY- Coat^{c} | Borchers | 0.09 |
| Fe-A | cyclopentadienyliron dicarbonyl iodide | Sigma Aldrich | 18 |
| Fe-B | cyclopentadienyliron dicarbonyl dimer | Sigma Aldrich | 32 |
| Fe-C | η⁵-C₅H₅ Fe(II) η⁵-C₆H₇ | prepared^{d} | 28 |
| Fe-1 | benzoyl ferrocene | Sigma Aldrich | 19 |
| Fe-2 | 1,1'-dibenzoyl ferrocene | Sigma Aldrich | 14 |

| | | | |
|---|---|---|---|
| ^{a} Cobalt neodecanoate ^{b} complex of Mn and 1 ,4,7-trimethyl-1 ,4,7-triazacyclononane ^{c} complex of Fe and bispidon ^{d} η⁵- C₅H₅ Fe(II) η⁵-C₆H₇ was prepared in accordance with the procedure described by Brown *et al* (R. Brown et al J. Chem. Soc., Dalton Trans., 1993, 1519). | | | |

In the paints with base paint A, the Co, BOC, and DC driers were added in liquid form (dissolved in organic solvent as supplied) and the ironcyclopentadienyl complexes and ferrocenes were added in solid form. To compensate for any solvent present in the dissolved driers, Exxsol D40 (hydrotreated heavy naphtha) was added to base paint A in such amount that the sum of the weight of Exxsol D40 and any solvent in the drier was 7.5 weight parts. Thus, the total amount of liquid was kept constant. In the paints with base paints B and C, all driers were added dissolved in an organic solvent (as supplied for Co and DC) or dissolved in Exxsol D40. In Table 2, the base paint used (A, B, or C), the primary drier used, and the amount of primary drier used (expressed as wt% of metal based on the total weight of the composition) is given for all paints that were prepared.

### Coatings

Coating films were prepared with the different alkyd paints. Drying times at 10 °C and at 23 °C and König hardness were determined as indicated below. The results are shown in Table 2.

### Test methods

The following test methods were used.

### Drying time

Drying times were determined according to ASTM D5895-13 using a BK recorder (wet film thickness 90 µm). After the application of the film on a glass panel (300 x 25 mm), a vertical blunt needle, pressed upon by a 5 g load, was placed into the freshly applied film and then dragged in a straight line through the drying paint in longitudinal direction of the panel. The so-called 'dry-hard time', i.e. when drying has proceeded sufficiently that the paint film is not displaced anymore (Stage III of drying in ASTM D5895-13) was determined for the paints within 1 day after preparation (initial) and after the paints had been stored at 35 °C for 2 weeks (aged). Drying time was determined at 10 °C and 85 % relative humidity and at 23 °C and 50% relative humidity. The drying at 10 °C was determined by applying the paint at 23 °C. Immediately after application the painted glass strip was moved into a room with a temperature of 10 °C.

### König hardness

The König hardness of paint films was assessed using the pendulum damping test according to DIN53157. A glass panel was coated with a 90 µm wet film, held at 23 °C and 50% relative humidity and the hardness development in time was monitored with a König pendulum. The number of oscillations needed to reduce from an initial deflection of 6° to a deflection of 3° was measured. The average of duplicate measurement was recorded.

The König hardness was measured after 1 day, 7 days and 14 days of storage at 23 °C and 50% relative humidity. After 14 days, the films were exposed for a further 100 hours to a temperature of 50 °C in an oven and the König hardness was determined after an acclimatization of 4 hours at 23 °C at 50% relative humidity.

Table 2 shows that a coating composition comprising an autoxidizable binder and a drier comprising an iron-ligand complex comprising an iron cation and a cyclopentadienyl group in a 1:1 molar ratio results in a coating film with good drying and hardness properties. Coating films prepared from coating compositions according to the invention (4-11) show a drying time and hardness comparable to coatings from cobalt-comprising compositions (e.g. C1).

**Table 2 - Drying time and König hardness of different paints**

| No. | Base | drier | metal (wt%) | BK drying at 10 °C (hours) | | BK drying at 23 °C (hours) | | König hardness (no. of oscillations) | | | |
|---|---|---|---|---|---|---|---|---|---|---|---|
| | | | | initial | aged | initial | aged | 1d | 7d | 14d | 100h 50°C |
| C1 | A | Co | 3.5·10⁻² | 3.6 | 4.0 | 2.6 | 2.7 | 14 | 23 | 25 | 41 |
| C2 | A | DC | 3.5·10⁻³ | 3.3 | 3.5 | 3.7 | 2.5 | 11 | 12 | 12 | 15 |
| C3 | A | DC | 1.4·10⁻² | 4.9 | 4.8 | 4.2 | 4.0 | 10 | 13 | 14 | 18 |
| C4 | A | BOC | 3.2·10⁻³ | 3 | 4.1 | 2 | 2.3 | 12 | 16 | 16 | 21 |
| C5 | A | BOC | 1.2·10⁻² | 13.5 | 9.1 | 4 | 6.3 | 11 | 14 | 15 | 20 |
| 1 | A | Fe-A | 1.8·10⁻² | 2.5 | 2.5 | 2 | 1.6 | 12 | 17 | 19 | 31 |
| 2 | A | Fe-A | 3.4·10⁻² | 2.0 | 1.8 | 1.3 | 1.3 | 12 | 18 | 20 | 37 |
| 3 | A | Fe-A | 7.0·10⁻² | 1.75 | 1.3 | 1.4 | 3.3 | 13 | 19 | 22 | 44 |
| 4 | A | Fe-B | 1.9·10⁻² | 5.3 | 4.2 | 3.3 | 4.0 | 12 | 18 | 19 | 28 |
| 5 | A | Fe-B | 3.5·10⁻² | 2.8 | 1.8 | 1.9 | 1.6 | 13 | 18 | 19 | 33 |
| 6 | A | Fe-B | 7.3·10⁻² | 2.0 | 1.4 | 1.3 | 1.1 | 14 | 20 | 22 | 40 |
| C6 | A | Fe-1 | 1.7·10⁻² | >20 | 10.4 | >20 | 8.4 | wet | 17 | 20 | 30 |
| C7 | A | Fe-1 | 3.6·10⁻² | 11.6 | 6.8 | >20 | 4.5 | wet | 18 | 21 | 35 |
| C8 | A | Fe-1 | 7.0·10⁻² | 6.4 | 4.1 | 8.1 | 3 | wet | 21 | 25 | 44 |
| C9 | A | Fe-2 | 1.7·10⁻² | 9.8 | 7.5 | 11.4 | 6.9 | wet | 16 | 18 | 28 |
| C10 | A | Fe-2 | 3.5·10⁻² | 6.3 | 4.5 | 6.9 | 5.3 | wet | 18 | 20 | 34 |
| C11 | A | Fe-2 | 6.9·10⁻² | 4.1 | 3.3 | 5 | 2.8 | wet | 19 | 22 | 40 |
| C13 | B | Co | 2.5·10⁻² | 3.5 | 4.4 | 2.3 | 2.6 | 16 | 28 | 35 | 40 |
| C12 | B | DC | 2.5·10⁻³ | 3.3 | 4.7 | 2.2 | 3.2 | 14 | 14 | 14 | 16 |
| 7 | B | Fe-C | 9.5·10⁻³ | 3.8 | 4.2 | 5.2 | 4.7 | 9.5 | 18 | 20 | 28 |
| 8 | B | Fe-C | 1.8·10⁻² | 2.4 | 2.4 | 3 | 3 | 13 | 20 | 22 | 33 |
| 9 | B | Fe-C | 3.2·10⁻² | 2.2 | 2.1 | 2.4 | 2.3 | 13 | 21 | 26 | 39 |
| C14 | C | Co | 3.5·10⁻² | 3.5 | 4.5 | 2.8 | 2.9 | 15 | 25 | 30 | 40 |
| C15 | C | DC | 3.5·10⁻³ | 3.5 | 3.3 | 5.2 | 3 | 13 | 13 | 13 | 15 |
| 10 | C | Fe-C | 1.4·10⁻² | 3.9 | 4.3 | 5 | 5.6 | 13 | 19 | 21 | 27 |
| 11 | C | Fe-C | 2.7·10⁻² | 2.5 | 2.6 | 3.3 | 3.2 | 13 | 19 | 22 | 31 |
| 12 | C | Fe-C | 5.6·10⁻² | 1.8 | 1.9 | 2.3 | 2.5 | 14 | 22 | 27 | 39 |

| | | | | | | | | | | | |
|---|---|---|---|---|---|---|---|---|---|---|---|
| * wet: coating film was too wet or sticky to measure | | | | | | | | | | | |

### EXAMPLE 2 - skin formation

From base paint D (89 parts by weight), different paints were prepared by adding a primary drier and Exxsol D40. To some of the paints, 0.5 weight parts of Exkin 2 was added. The amount of Exxsol D40 was such that the total amount of drier and Exxsol D40 was 10.5 weight parts. In Table 3, the amount of metal from the drier (wt% based on the total weight of the composition) is given.

A metal can (content 125 mL, diameter 6 cm) was filled with 70 grams of paint and closed with a metal lid (approximate filling level 50 vol%). The can was placed at room temperature. It was opened briefly every day to check for the presence of a skin, without disrupting the paint surface. The time until first formation of notable solidified material at the surface of the paint (start of skin formation) and the time until the entire paint surface was covered with a skin (full skin formation) was noted.

Drying time at 23 °C and König hardness was determined as described above for EXAMPLE 1. The results of the determination of skin formation, drying time and hardness are shown in Table 3.

**Table 3 - Skin formation with and without anti-skinning agent**

| No. | Drier | | MEKO | Time to skin formation (days) | | BK drying at 23 °C (hours) | | König hardness (no. of oscillations) | | | |
|---|---|---|---|---|---|---|---|---|---|---|---|
| | type | metal (wt%) | | start | full | initial | aged | 1d | 7d | 14d | 100h 50°C |
| C16 | Co | 5.0·10⁻² | yes | >50 | > 50 | 2.1 | 2.5 | 12 | 31 | 38 | 47 |
| C17 | BOC | 4.5·10⁻⁴ | yes | 3 | 8 | 2.1 | 9.5 | 12 | 21 | 22 | 22 |
| C18 | DC | 5.0·10⁻³ | yes | 36 | >50 | 2.3 | 3.5 | 11 | 16 | 16 | 18 |
| C19 | Co | 5.0·10⁻² | no | 1 | 1 | 1.3 | 1.4 | 15 | 26 | 29 | 38 |
| C20 | BOC | 4.5·10⁻⁴ | no | 1 | 2 | 1.6 | 1.7 | 14 | 23 | 24 | 24 |
| C21 | DC | 5.0·10⁻³ | no | 1 | 2 | 1.6 | 2.0 | 13 | 16 | 16 | 18 |
| 13 | Fe-C | 1.8·10⁻² | no | n.d.* | 25 | 3.1 | 3.1 | 9 | 22 | 24 | 26 |
| 14 | Fe-C | 3.7·10⁻² | no | 22 | 39 | 2.4 | 2.1 | 11 | 23 | 25 | 29 |

| | | | | | | | | | | | |
|---|---|---|---|---|---|---|---|---|---|---|---|
| * not determined | | | | | | | | | | | |

The results show that the coating compositions according to the invention are not prone to quick skin formation, even not in the absence of an anti-skinning agent.

### EXAMPLE 3 - discoloration

From base paint B (89 parts by weight), different paints were prepared by adding η⁵-C₅H₅ Fe(II) η⁵-C₆H₇ (Fe-C) as primary drier, Exxsol D40 as solvent, and a hindered amine light stabilizer or a UV absorber. The amount of Exxsol D40 was such that the total amount of drier, hindered amine light stabilizer or UV absorber, and Exxsol D40 was 10.5 weight parts. In Table 4, the amount of metal from the drier (wt% based on the total weight of the composition), type and amount of hindered amine light stabilizer (HALS) or UV absorber is given.

Color characteristics of the paints thus prepared and of paint no. 8 (see Table 2 above) were determined as follows. Paint was applied on a Leneta opacity chart (within 1 day after preparation) using a rake with a radius of 0.7 mm. The painted chart was dried for 24 hours at 23 °C and 50 % relative humidity and then stored in an oven at 50 °C for 3 days. Then, the color of the coatings was measured using a portable X-Rite Ci51 spectrophotometer expressing CIE-Lab color space values L, a and b. A more positive a-value indicates a redder color. A positive b-value indicates a yellower color.

**Table 4 - discoloration with and without HALS**

| No. | Drier | | HALS or UV absorber | | Color (CIE-lab) | |
|---|---|---|---|---|---|---|
| | type | metal (wt%) | type | wt% | b-value | a-value |
| 8 | Fe-C | 1.8·10⁻² | none | - | 4.84 | 0.70 |
| 15 | Fe-C | 1.8·10⁻² | HALS - Tinuvin 5100 | 0.66 | 3.41 | -0.47 |
| 16 | Fe-C | 1.8·10⁻² | HALS -Tinuvin 292 | 0.66 | 4.52 | -0.33 |
| 17 | Fe-C | 1.8·10⁻² | HALS -TEMPO | 0.33 | 3.82 | -0.27 |
| 18 | Fe-C | 1.8·10⁻² | UV absorber - Tinuvin 99-2 | 0.66 | 4.78 | 0.49 |
| 19 | Fe-C | 1.8·10⁻² | UV absorber - Tinuvin 1130 | 0.66 | 4.85 | 0.45 |
| 20 | Fe-C | 1.8·10⁻² | UV absorber - Tinuvin 400 | 0.66 | 5.00 | 0.59 |

| | | | | | | |
|---|---|---|---|---|---|---|
| Tinuvin 5100: 100% Decanedioic acid, bis(2,2,6,6-tetramethyl-4-piperidinyl) ester, reaction products with tert-Bu hydroperoxide and octane (CAS # 129757-67-1) Tinuvin 292: Reaction mass of bis(1,2,2,6,6-pentamethyl-4-piperidyl) sebacate and methyl 1,2,2,6,6-pentamethyl-4-piperidyl sebacate TEMPO: (2,2,6,6-Tetramethylpiperidin-1-yl)oxyl (CAS # 2564-83-2) Tinuvin 99-2: UV absorber of hydroxyphenyl-benzotriazole type Tinuvin 1130 UV absorber of hydroxyphenyl-benzotriazole type Tinuvin 400: hydroxyphenyl-triazine UV absorber | | | | | | |

Compared to paints no. 8 and 18-20, paints no. 15, 16 and 17 showed less orange discoloration. This shows that the addition of a hindered amine light stabilizer, reduces discoloration, whilst an UV absorber does not show such effect.

## Claims

1. A coating composition comprising an autoxidizable binder and an iron-ligand complex as drier, wherein the iron-ligand complex comprises an iron cation, an optionally substituted cyclopentadienyl group as ligand, and a further ligand other than a cyclopentadienyl group, wherein the molar ratio of iron cation to cyclopentadienyl group is 1:1.

2. A coating composition according to claim 1, wherein the amount of iron cation comprised in the iron-ligand complex is in the range of from 1.10⁻⁴ wt% to 1.0 wt%, preferably of from 1·10⁻³ wt% to 0.1 wt%, based on the weight of autoxidizable binder.

3. A coating composition according to claim 1 or 2, wherein the iron cation in the iron-ligand complex is an iron(II) ion.

4. A coating composition according to any one of the preceding claims, wherein the iron-ligand complex is selected from the group consisting of a complex of formula (I) 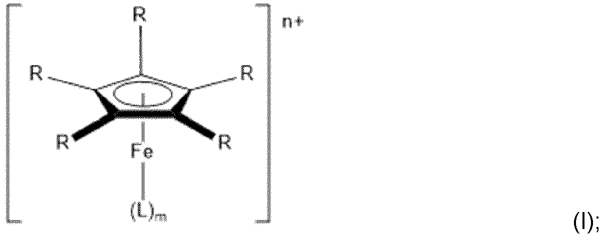 and a complex of formula (II) 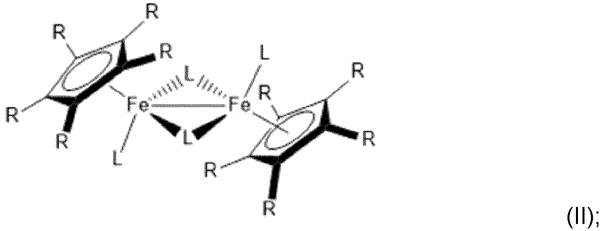 wherein:
n is an integer with a value of 0, 1, or 2, preferably n is 0 or 1;
m is an integer with a value of 1, 2 or 3;
R is, independently, an H atom, a straight or branched alkyl radical having 1 to 40 carbon atoms, or an aryl radical having 6 to 20 carbon atoms;
L is, independently, a ligand other than a cyclopentadienyl group.

5. A coating composition according to claim 4, wherein R is, independently an H atom, a straight or branched alkyl radical having 1 to 20 carbon atoms, or an aryl radical having 6 to 16 carbon atoms.

6. A coating composition according to claim 5, wherein the iron-ligand complex is selected from the group consisting of cyclopentadienyliron(II) dicarbonyl dimer, cyclopentadienyliron dicarbonyl halide wherein the halide is iodide, bromide or chloride, and η⁵-C₅H₅ Fe(ll) η⁵-C₆H₇.

7. A coating composition according to claim 6, wherein the iron-ligand complex is cyclopentadienyliron dicarbonyl iodide.

8. A coating composition according to claim 6, wherein the iron-ligand complex is cyclopentadienyliron(II) dicarbonyl dimer.

9. A coating composition according to claim 6, wherein the iron-ligand complex is η⁵-C₅H₅ Fe(II) η⁵-C₆H₇.

10. A coating composition according to any one of the preceding claims wherein the coating composition is a solvent borne composition.

11. A coating composition according to any one of the preceding claims, wherein the coating composition does not comprise cobalt.

12. A coating composition according to any one of the preceding claims, wherein the autoxidizable binder is an alkyd resin.

13. A coating composition according to any one of the preceding claims, further comprising a hindered amine light stabilizer.

14. A substrate coated with a coating deposited from a coating composition according to any one of the preceding claims.

15. Use of an iron-ligand complex as defined in any one of claims 1 to 9 in a coating composition comprising an autoxidizable resin to enhance drying of the coating composition.

## Patentansprüche

1. Beschichtungszusammensetzung, umfassend ein autoxidierbares Bindemittel und einen Eisen-Ligand-Komplex als Trockenstoff, wobei der Eisen-Ligand-Komplex ein Eisen-Kation, eine gegebenenfalls substituierte Cyclopentadienylgruppe als Ligand und einen weiteren Liganden, der von einer Cyclopentadienylgruppe verschieden ist, umfasst, wobei das Molverhältnis von Eisen-Kation zu Cyclopentadienylgruppe 1:1 beträgt.

2. Beschichtungszusammensetzung nach Anspruch 1, wobei die Menge an Eisen-Kation in dem Eisen-Ligand-Komplex im Bereich von 1·10⁻⁴ Gew.-% bis 1,0 Gew.-%, vorzugsweise von 1·10⁻³ Gew.-% bis 0,1 Gew.-%, bezogen auf das Gewicht des autoxidierbaren Bindemittels, liegt.

3. Beschichtungszusammensetzung nach Anspruch 1 oder 2, wobei es sich bei dem Eisen-Kation in dem Eisen-Ligand-Komplex um ein Eisen(II)-Ion handelt.

4. Beschichtungszusammensetzung nach einem der vorhergehenden Ansprüche, wobei der Eisen-Ligand-Komplex aus der Gruppe bestehend aus einem Komplex der Formel (I) 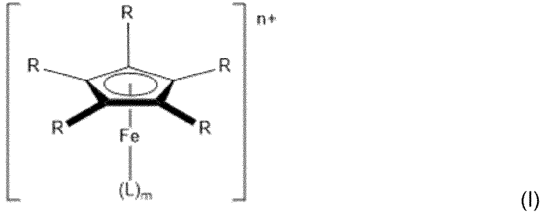 und einem Komplex der Formel II 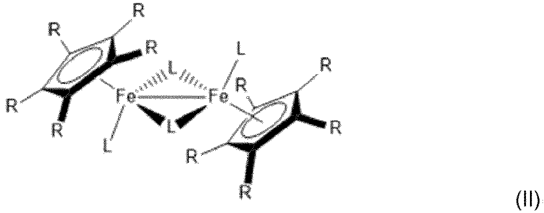 ausgewählt ist, wobei:
n für eine ganze Zahl mit einem Wert von 0, 1 oder 2 steht, vorzugsweise n für 0 oder 1 steht;
m für eine ganze Zahl mit einem Wert von 1, 2 oder 3 steht;
R unabhängig für ein H-Atom, einen geraden oder verzweigten Alkylrest mit 1 bis 40 Kohlenstoffatomen oder einen Arylrest mit 6 bis 20 Kohlenstoffatomen steht;
L unabhängig für einen Liganden, der von einer Cyclopentadienylgruppe verschieden ist, steht.

5. Beschichtungszusammensetzung nach Anspruch 4, wobei R unabhängig für ein H-Atom, einen geraden oder verzweigten Alkylrest mit 1 bis 20 Kohlenstoffatomen oder einen Arylrest mit 6 bis 16 Kohlenstoffatomen steht.

6. Beschichtungszusammensetzung nach Anspruch 5, wobei der Eisen-Ligand-Komplex aus der Gruppe bestehend aus Cyclopentadienyleisen(II)-dicarbonyl-Dimer, Cyclopentadienyleisendicarbonylhalogenid, wobei es sich bei dem Halogenid um lodid, Bromid oder Chlorid handelt, und η⁵-C₅H₅ Fe(II) η⁵-C₆H₇ ausgewählt ist.

7. Beschichtungszusammensetzung nach Anspruch 6, wobei es sich bei dem Eisen-Ligand-Komplex um Cyclopentadienyleisendicarbonyliodid handelt.

8. Beschichtungszusammensetzung nach Anspruch 6, wobei es sich bei dem Eisen-Ligand-Komplex um Cyclopentadienyleisen(II)-dicarbonyl-Dimer handelt.

9. Beschichtungszusammensetzung nach Anspruch 6, wobei es sich bei dem Eisen-Ligand-Komplex um η⁵-C₅H₅ Fe(II) η⁵-C₆H₇ handelt.

10. Beschichtungszusammensetzung nach einem der vorhergehenden Ansprüche, wobei es sich bei der Beschichtungszusammensetzung um eine lösungsmittelhaltige Zusammensetzung handelt.

11. Beschichtungszusammensetzung nach einem der vorhergehenden Ansprüche, wobei die Beschichtungszusammensetzung kein Cobalt umfasst.

12. Beschichtungszusammensetzung nach einem der vorhergehenden Ansprüche, wobei es sich bei dem autoxidierbaren Bindemittel um ein Alkydharz handelt.

13. Beschichtungszusammensetzung nach einem der vorhergehenden Ansprüche, ferner umfassend ein Lichtschutzmittel vom Typ gehindertes Amin.

14. Substrat, das mit einer aus einer Beschichtungszusammensetzung nach einem der vorhergehenden Ansprüche abgeschiedenen Beschichtung beschichtet ist.

15. Verwendung eines Eisen-Ligand-Komplexes gemäß einem der Ansprüche 1 bis 9 in einer Beschichtungszusammensetzung, die ein autoxidierbares Harz umfasst, zur Verbesserung der Trocknung der Beschichtungszusammensetzung.

## Revendications

1. Composition de revêtement comprenant un liant autooxydable et un complexe fer-ligand en tant que sécheur, le complexe fer-ligand comprenant un cation fer, un groupe cyclopentadiényle éventuellement substitué comme ligand, et un ligand supplémentaire autre qu'un groupe cyclopentadiényle, le rapport molaire de cation fer sur groupe cyclopentadiényle étant de 1 : 1.

2. Composition de revêtement selon la revendication 1, la quantité de cation fer comprise dans le complexe fer-ligand étant dans la plage allant de 1.10⁻⁴ % en poids à 1,0 % en poids, préférablement allant de 1.10⁻³ % en poids à 0,1 % en poids, sur la base du poids de liant autooxydable.

3. Composition de revêtement selon la revendication 1 ou 2, le cation fer dans le complexe fer-ligand étant un ion fer(II).

4. Composition de revêtement selon l'une quelconque des revendications précédentes, le complexe fer-ligand étant choisi dans le groupe constitué par un complexe de formule (I) 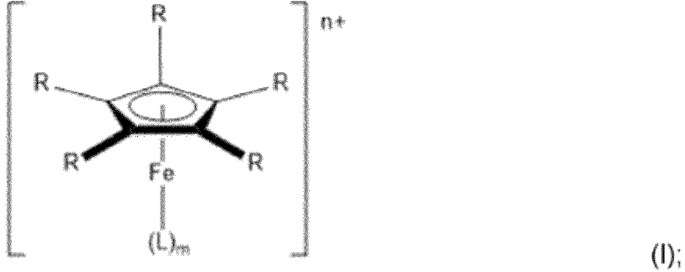 et un complexe de formule (II) 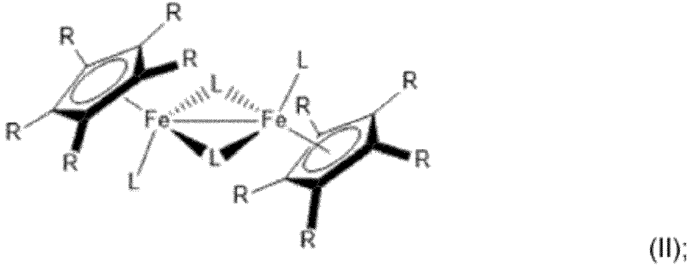
n étant un entier doté d'une valeur de 0, 1, ou 2, préférablement n étant 0 ou 1 ;
m étant un entier doté d'une valeur de 1, 2 ou 3 ;
R étant, indépendamment, un atome de H, un radical alkyle linéaire ou ramifié ayant 1 à 40 atomes de carbone, ou un radical aryle ayant 6 à 20 atomes de carbone ;
L étant, indépendamment, un ligand autre qu'un groupe cyclopentadiényle.

5. Composition de revêtement selon la revendication 4, R étant, indépendamment un atome de H, un radical alkyle linéaire ou ramifié ayant 1 à 20 atomes de carbone, ou un radical aryle ayant 6 à 16 atomes de carbone.

6. Composition de revêtement selon la revendication 5, le complexe fer-ligand étant choisi dans le groupe constitué par le dimère de cyclopentadiénylfer(ll) dicarbonyle, un halogénure de cyclopentadiénylfer dicarbonyle dans lequel l'halogénure est iodure, bromure ou chlorure, et η⁵-C₅H₅ Fe(ll) η⁵-C₆H₇.

7. Composition de revêtement selon la revendication 6, le complexe fer-ligand étant l'iodure de cyclopentadiénylfer dicarbonyle.

8. Composition de revêtement selon la revendication 6, le complexe fer-ligand étant le dimère de cyclopentadiénylfer(ll) dicarbonyle.

9. Composition de revêtement selon la revendication 6, le complexe fer-ligand étant η⁵-C₅H₅ Fe(ll) η⁵-C₆H₇.

10. Composition de revêtement selon l'une quelconque des revendications précédentes, la composition de revêtement étant une composition à base de solvant.

11. Composition de revêtement selon l'une quelconque des revendications précédentes, la composition de revêtement ne comprenant pas de cobalt.

12. Composition de revêtement selon l'une quelconque des revendications précédentes, le liant autooxydable étant une résine d'alkyde.

13. Composition de revêtement selon l'une quelconque des revendications précédentes, comprenant en outre un photostabilisant de type amine encombrée.

14. Substrat revêtu par un revêtement déposé à partir d'une composition de revêtement selon l'une quelconque des revendications précédentes.

15. Utilisation d'un complexe fer-ligand tel que défini dans l'une quelconque des revendications 1 à 9 dans une composition de revêtement comprenant une résine autooxydable pour augmenter le séchage de la composition de revêtement.
